# EUROPÄISCHE PATENTANMELDUNG

(11) **EP 2 282 282 A1**
(43) Veröffentlichungstag der Anmeldung: **09.02.2011**
(21) Anmeldenummer: 10007557.1
(22) Anmeldetag: 21.07.2010
(51) Int. Cl.: G06K 7/00, G06K 13/08, G07F 19/00, B08B 1/00

(54) **Lesegerät zum Lesen von Informationen von Karten aus Plastik**

(30) Priorität: 04.08.2009 DE 102009036008
(71) Anmelder: Buchert, Jürgen, 97422 Schweinfurt (DE)
(72) Erfinder: Buchert, Jürgen, 97422 Schweinfurt (DE)
(74) Vertreter: Tergau & Pohl Patentanwälte

(57) **Zusammenfassung**

Das Lesegerät (2) zum Lesen von Informationen enthaltenden Karten (4) aus Plastik, insbesondere von Kreditkarten oder von den von Fluggesellschaften ausgegebenen Karten (4), umfasst a) einen Einführschlitz (6), der zur Aufnahme der Karten (4) bestimmt ist, b) einen Ausgabeschlitz (10) für die Karten (4) und c) eine hinter dem Einführschlitz (6) angeordnete Leseeinrichtung (12) für die Karten (4). Es ist gekennzeichnet durch mindestens eine Desinfektions-Einrichtung (14, 24) in ihrem Innenraum. Mit dieser Desinfektions-Einrichtung (14, 24) sind die Karten (4) beim Eingeben in den Einführschlitz (6) und/oder beim Herausgeben aus dem Ausgabeschlitz (10) desinfizierbar, so dass der Benutzer der Karten (4) vor einer Infektionsgefahr bewahrt ist.

## Beschreibung

Die Erfindung betrifft ein Lesegerät zum Lesen von Informationen enthaltenden Karten aus Plastik, insbesondere von Kreditkarten oder von Karten, die von Fluggesellschaften ausgegeben werden,
a) mit einem Einführschlitz, der zur Aufnahme der Karten bestimmt ist,
b) mit einem Ausgabeschlitz für die Karten und
c) mit einer hinter dem Einführschlitz angeordneten Leseeinrichtung für die Karten.

Heutzutage werden immer mehr Plastikkarten ausgegeben, sei es z. B. als Kreditkarten von großen Kartengesellschaften, sei es als Kreditkarten oder Karten zum Erwerb von Bonuspunkten von Kaufhäusern und anderen Geschäften. Aber auch Fluggesellschaften geben an ihre Fluggäste Karten zum Erwerb von Bonuspunkten oder zum Buchen von Flügen aus.

Dabei bildet ein Problem die Infektionsgefahr, die von solchen Plastikkarten ausgehen kann. Mittels solcher Plastikkarten können nämlich Bakterien, Viren und Keime bei Benutzung in einer Gerätschaft an oder durch die Gerätschaft weitergegeben werden. Diese Gefahr wird bei der Globalisierung der kommerziellen Tätigkeiten immer größer. Es ist also z. B. bei einer Kreditkarte, die zwecks Buchung in ein Lesegerät eingegeben wird, nicht sichergestellt, dass diese Kreditkarte nicht vom Lesegerät selbst, das durch eine zuvor eingeführte Kreditkarte infiziert worden ist, ebenfalls infiziert wird. Außerdem ist nicht sichergestellt, dass derjenige, der die Kreditkarte in das Lesegerät einführt, z. B. das Empfangspersonal in einem Hotel, diese Kreditkarte nicht selbst infiziert.

Das letztere Problem ließe sich dadurch vermeiden, dass der Kartenbesitzer seine Karte selbst und stets ohne Zuhilfenahme einer weiteren Person in ein Lesegerät einschiebt und von dort auch wieder herauszieht. Es würde dann aber immer noch die Möglichkeit bestehen, dass die Karte im Lesegerät selbst infiziert wird. Aufgabe der Erfindung ist es, ein Lesegerät für Informationen enthaltende Karten derart auszugestalten, dass eine Infektion der gerade benutzten Karte durch das Lesegerät weitgehend ausgeschlossen und der Benutzer damit geschützt ist.

Diese Aufgabe wird bei einem Lesegerät der eingangs genannten Art erfindungsgemäß gelöst durch eine Desinfektions-Einrichtung, mit der die Karten beim Eingeben in den Einführschlitz und/oder beim Herausgeben aus dem Ausgabeschlitz desinfizierbar sind.

Das Lesegerät enthält also an geeigneter Stelle eine Desinfektions-Einrichtung.

Diese Desinfektions-Einrichtung stellt sicher, dass die vom Lesegerät nach dem Lesen oder Beschreiben ausgegebene Plastikkarte desinfiziert ist, und dass über diese Karte keine Viren, Bakterien und Keime weitergegeben werden können. Außerdem ist sichergestellt, dass der Besitzer der Karte vor einer Ansteckungsgefahr geschützt ist, selbst dann, wenn eine andere Person die Karte in das Lesegerät eingegeben hat.

Gemäß einer besonders bevorzugten Ausführungsform ist vorgesehen, dass die Desinfektions-Einrichtung unmittelbar hinter dem Einführschlitz und/oder am Ausgabeschlitz angeordnet ist. Damit kann erreicht werden, dass die gesamte Karte sowohl beim Einführen als auch beim Herausgeben desinfiziert wird. Dies gilt auch, wenn der Einführschlitz auch gleichzeitig der Ausgabeschlitz ist.

Bevorzugt wirkt die Desinfektions-Einrichtung auf beide Seiten der Karten ein.

Gemäß einer ersten grundlegenden Weiterbildung ist vorgesehen, dass die Desinfektions-Einrichtung zur Abgabe von UV-Licht in Richtung auf die jeweils eingegebene Karte eingerichtet ist. Dabei kann vorgesehen sein, dass die Desinfektions-Einrichtung zwei UV-Licht-Röhren umfasst, die parallel zu einander hinter dem Einführschlitz unter Bildung einer Passage derart angeordnet sind, dass die jeweilige Karte durch die Passage hindurch bewegbar ist. Statt UV-Licht kann in gewissen Fällen auch Infrarot-Licht eingesetzt werden.

Gemäß einer zweiten grundlegenden Weiterbildung ist vorgesehen, dass die Desinfektions-Einrichtung zur Abgabe einer Desinfektionsflüssigkeit an die jeweils eingegebene Karte bestimmt ist.

Hierbei kann die Desinfektions-Einrichtung mindestens einen Schwamm umfassen, der mittels eines Vorratsbehälters für die Desinfektionsflüssigkeit wiederholt anfeuchtbar ist.

Eine besonders zweckmäßige Ausführung zeichnet sich dabei dadurch aus, dass die Desinfektions-Einrichtung zwei Schwämme umfasst, die parallel zu einander unter Bildung einer Passage derart angeordnet sind, dass die jeweilige Karte durch die Passage hindurch bewegbar ist. Diese Schwämme sind vorteilhafterweise auf zwei sich gegenläufig zueinander drehbaren Rollen befestigt.

Drei Ausführungsbeispiele der Erfindung werden im folgenden prinzipiell an Hand von Figuren näher erläutert. Das erste Ausführungsbeispiel bezieht sich dabei auf ein Lesegerät mit einer auf UV-Bestrahlung beruhenden Desinfektions-Einrichtung, wobei die jeweilige Karte ohne Umkehr durch das Lesegerät hindurch läuft. Das zweite Ausführungsbeispiel bezieht sich auf ein Lesegerät mit einer auf Flüssigkeits-Desinfektion beruhenden Desinfektions-Einrichtung, wobei die jeweilige Karte an den Einführschlitz zurückgeführt wird. Und das dritte Ausführungsbeispiel bezieht sich auf ein Lesegerät, das sowohl eine auf UV-Bestrahlung als auch eine auf Flüssigkeitskontakt beruhende Desinfektions-Einrichtung besitzt.

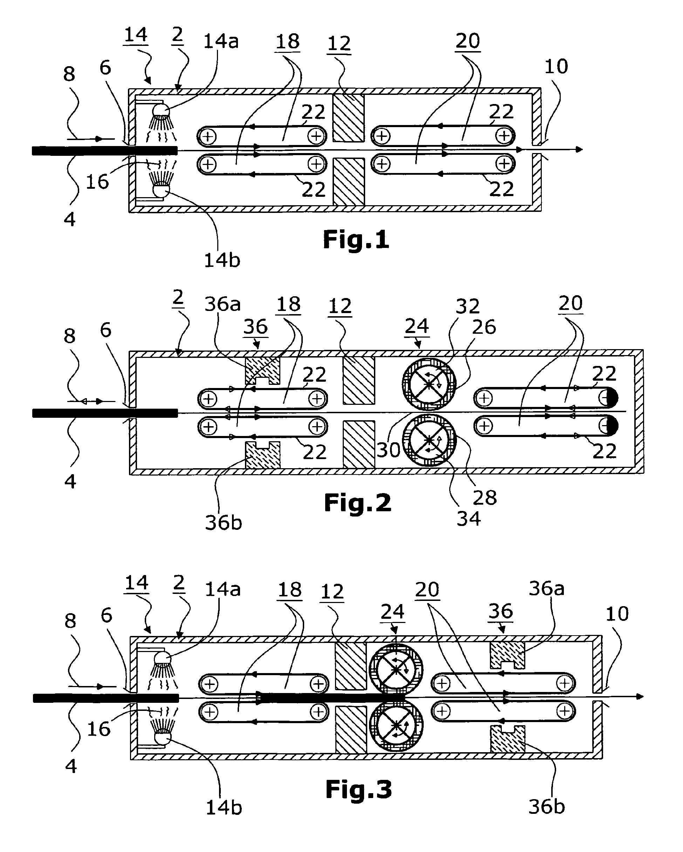

Gleiche oder gleichartige Bauelemente sind in den Fig. 1 bis 3 mit denselben Bezugszeichen versehen.

Gemäß Fig. 1 ist ein Lesegerät 2 zum Lesen von Informationen enthaltenden Karten 4 aus Plastik rechteckig ausgebildet. Die Informationen können z. B. auf Chip oder Magnetstreifen gespeichert sein. Das Gerät 2 ist in einer seitlichen Schnittansicht gezeigt. Bei den Karten 4 kann es sich um Kreditkarten, Tankkarten, Flugkarten oder Supermarkt-Karten handeln. Solche Karten 4 können u. U. ohne die hier diskutierten Maßnahmen eine gewisse Infektionsgefahr für den Besitzer darstellen, z. B. dadurch, dass sie bei Benutzung in die Hände des Personals übergeben oder beim Lesevorgang im betreffenden Gerät infiziert werden.

Das Lesegerät 2 besitzt in üblicher Weise eine Einführungseinrichtung zur Aufnahme der Karten 4. Von dieser Einrichtung ist vorliegend nur der Einführschlitz 6 gezeigt, der in das Innere des Gehäuses führt. Die Einführungsrichtung und Transportrichtung der Karten 4 sind mit 8 bezeichnet. Von der am anderen Ende gelegenen Auswurfeinrichtung ist lediglich der Ausgabeschlitz 10 gezeigt. Im Inneren befindet sich eine Leseeinrichtung 12, mit der Daten der Karten 4 gelesen oder ggf. weitere Daten dort gespeichert werden können.

Von Bedeutung ist nun, dass zur Desinfektion der eingegebenen Karten 4 sich im Inneren auch eine Desinfektions-Einrichtung 14 befindet. Nach Fig. 1 ist sie unmittelbar hinter dem Einführschlitz 6 gelegen. Sie ist so konstruiert, dass sie die Karten 4 beim Durchgang von beiden Seiten desinfiziert. In Fig. 1 besitzt sie eine obere und eine untere UV-Licht-Röhre 14a bzw. 14b, die parallel zu einander unter Bildung einer Passage 16 angeordnet sind. Durch diese Passage 16 wird die jeweils eingegebene Karte 4 hindurchgeführt.

Zum Transport der Karten 4 in Richtung auf den Ausgabeschlitz 10 sind eine erste und eine zweite Transporteinrichtung 18 bzw. 20 vorgesehen. Jede Transporteinrichtung 18, 20 besteht aus einem Paar von Mitnahmeeinrichtungen, von denen jede zwei nicht näher bezeichnete Antriebsrollen umfasst, die von einem Transportband 22 umschlungen sind. Die Transportrichtung und damit Mitnahmerichtung für die Karten 4 ist durch Pfeile an den vier Transportbändern markiert. Die Karten 4 passen dabei in den Raum zwischen den Transportbändern eines jeden Paares. Vorliegend ist die Leseeinrichtung 12 zwischen den beiden Transporteinrichtungen 18, 20 positioniert. Die erste Transporteinrichtung 18 ist so angeordnet, dass sie nach dem Hineinstecken die betreffende Karte 4 ergreift. Die zweite Transporteinrichtung 20 sorgt nach dem Lesevorgang für das Herauswerfen der Karte 4

In gewissen Fällen kann statt mit UV-Licht auch mit IR-Licht gearbeitet werden.

In Fig. 2 ist eine Variation des Lesegeräts 2 von Fig. 1 gezeigt. Zunächst einmal ist anzumerken, dass hier Einführ- und Ausgabeschlitz 6 bzw. 10 zusammenfallen, und dass die beiden Transporteinrichtungen 18, 20 einen Hin- und Her-Transport ermöglichen. Dies ist durch die Doppelpfeile an den 4 Transportbändern gekennzeichnet. Die jeweils eingeschobene Karte 4 kehrt am rechten Ende des Lesegeräts 2 ihre Bewegungsrichtung um, so dass die Einführungsrichtung 8 auch der Ausgaberichtung entspricht. Dies ist durch den ebenfalls dort angebrachten Doppelpfeil kenntlich gemacht.

Im vorliegenden Fall von Fig. 2 wird eine anders geartete Desinfektions-Einrichtung 24 eingesetzt. Es handelt sich hier um eine Einrichtung 24, die zur Abgabe einer Desinfektionsflüssigkeit an die jeweils eingegebene Karte 4 bestimmt ist. Speziell umfasst die Desinfektions-Einrichtung 24 hier zwei kreisförmig gebogene Schwämme 26, 28, die mittels eines (nicht gezeigten) Vorratsbehälters für die Desinfektionsflüssigkeit wiederholt angefeuchtet werden können, wobei jeder der beiden Schwämme 26, 28 an einer Seite der betreffenden Karte 4 entlang streicht. Man kann sagen, dass die beiden Schwämme 26, 28 symmetrisch zu einander unter Bildung einer Passage 30 angeordnet sind. Im Betrieb wird nach Fig. 3 die betreffende Karte 4 zunächst von links nach rechts und dann von rechts nach links durch die Passage 30 hindurchgeführt. Sie liegt dabei an den Schwämmen 26, 28 an. Speziell sind die beiden Schwämme 26, 28 auf zwei gegenläufig drehbaren, parallel zu einander angeordneten Rollen 32, 34 befestigt. Die Hin- und Herbewegung ist durch die gekrümmten Doppelpfeile auf den Rollen 32, 34 gekennzeichnet. Beim Rücklauf wird die Karte 4 getrocknet. Hierzu ist ein Trocknungsgerät 36 in Form von zwei einander gegenüberliegenden Warmluftgebläsen 36a, 36b vorgesehen. Dieses Trocknungsgerät 36 ist nahe des Auslaufs der Karten 4 angeordnet. In Fig. 2 ist die Leseeinrichtung 12 zwischen der ersten Transporteinrichtung 18 und der Desinfektions-Einrichtung 24 positioniert.

Die Ausführungsform von Fig. 3 macht deutlich, dass in dem Lesegerät 2 auch zwei unterschiedlich wirkende Desinfektions-Einrichtungen 14, 24, vorliegend eine UV-Licht-Einrichtung 14 und eine Flüssigkeits-Einrichtung 24, untergebracht sein können. In dieser Ausführungsform werden die Karten 4 wieder geradlinig von Einführschlitz 6 zum Ausgabeschlitz 10 weitergereicht. Die Desinfektions-Einrichtung 24 liegt auch hier wieder zwischen den beiden Transporteinrichtungen 18, 20. Die Rollen 32, 34 drehen sich hier nur in Vorwärtsrichtung, was durch gekrümmte Einfach-Pfeile verdeutlicht ist. Die Trockeneinrichtung 36, die wieder aus einander gegenüberliegenden Warmluftgebläsen 36a, 36b bestehen kann, befindet sich hier nahe der Ausgabeeinrichtung mit dem Ausgabeschlitz 10. Und die Leseeinrichtung 12 für die Karten 4 liegt hier zwischen den beiden Desinfektions-Einrichtungen 14, 24.

Es soll noch einmal betont werden, dass die Infektionsgefahr für den Besitzer einer Karte 4 infolge der hier vorgenommenen Anordnung einer einzelnen oder mehrer Desinfektions-Einrichtung(en) 14, 24 im Lesegerät 2 drastisch reduziert ist. Dabei ist es gleichgültig, ob die Infektionsmöglichkeit von der Karte 4 selbst infolge Fremdbenutzung oder letztlich vom Lesegerät 2 ausgeht.

### Bezugszeichenliste

- 2: Lesegerät
- 4: Karte
- 6: Einführschlitz
- 8: Einführungsrichtung, Transportrichtung
- 10: Ausgabeschlitz
- 12: Leseeinrichtung
- 14: Desinfektions-Einrichtung
- 14a: obere UV-Licht-Röhre
- 14b: untere UV-Licht-Röhre
- 16: Passage
- 18: erste Transporteinrichtung
- 20: zweite Transporteinrichtung
- 22: Transportband
- 24: Desinfektions-Einrichtung
- 26: Schwamm
- 28: Schwamm
- 30: Passage
- 32: Rolle
- 34: Rolle
- 36: Trocknungsgerät
- 36a: oberes Warmluftgebläse
- 36b: unteres Warmluftgebläse

## Patentansprüche

1. Lesegerät (2) zum Lesen von Informationen enthaltenden Karten (4) aus Plastik, insbesondere von Kreditkarten oder von den von Fluggesellschaften ausgegebenen Karten (4),
a) mit einem Einführschlitz (6), der zur Aufnahme der Karten (4) bestimmt ist,
b) mit einem Ausgabeschlitz (10) für die Karten (4) und
c) mit einer hinter dem Einführschlitz (6) angeordneten Leseeinrichtung (12) für die Karten,
**gekennzeichnet durch** mindestens eine Desinfektions-Einrichtung (14, 24), mit der die Karten (4) beim Eingeben in den Einführschlitz (6) und/oder beim Herausgeben aus dem Ausgabeschlitz (10) desinfizierbar sind.

2. Lesegerät (2) nach Anspruch 1, **dadurch gekennzeichnet, dass** die Desinfektions-Einrichtung (14) unmittelbar hinter dem Einführschlitz (6) angeordnet ist.

3. Lesegerät (2) nach Anspruch 1 oder 2, **dadurch gekennzeichnet, dass** die Desinfektions-Einrichtung (14) zur Abgabe von UV-Licht oder Infrarot-Licht in Richtung auf die jeweils eingegebene Karte (4) bestimmt ist.

4. Lesegerät (2) nach Anspruch 3, **dadurch gekennzeichnet, dass** die Desinfektions-Einrichtung (14) zwei UV-Licht-Röhren (14a, 14b) umfasst, die parallel zu einander hinter dem Einführschlitz (6) unter Bildung einer Passage (16) derart angeordnet sind, dass die jeweilige Karte (4) durch die Passage (16) hindurch bewegbar ist.

5. Lesegerät (2) nach einem der Ansprüche 1 oder 2, **dadurch gekennzeichnet, dass** die Desinfektions-Einrichtung (24) zur Abgabe einer Desinfektionsflüssigkeit an die jeweils eingegebene Karte (4) bestimmt ist.

6. Lesegerät (2) nach Anspruch 5, **dadurch gekennzeichnet, dass** die Desinfektions-Einrichtung (24) mindestens einen Schwamm (26, 28) umfasst, der mittels eines Vorratsbehälters für die Desinfektionsflüssigkeit wiederholt anfeuchtbar ist.

7. Lesegerät (2) nach Anspruch 5 oder 6, **dadurch gekennzeichnet, dass** die Desinfektions-Einrichtung (24) zwei Schwämme (26, 28) umfasst, die parallel zu einander unter Bildung einer Passage (30) derart angeordnet sind, dass die jeweilige Karte (4) durch die Passage (30) hindurch bewegbar ist.

8. Lesegerät (2) nach Anspruch 7, **dadurch gekennzeichnet, dass** die Schwämme (26, 28) auf zwei gegenläufig drehbaren Rollen (32, 34) befestigt sind.

9. Lesegerät (2) nach einem der Ansprüche 5 bis 8, **dadurch gekennzeichnet, dass** ein Trocknungsgerät (36), bevorzugt in Form von zwei Warmluftgebläsen (36a, 36b), zum Abtrocknen der Desinfektionsflüssigkeit von den Karten (4) vorgesehen ist.

10. Lesegerät (2) nach einem der Ansprüche 1 bis 9, **dadurch gekennzeichnet, dass** zwei Desinfektions-Einrichtungen (14, 24) vorgesehen sind.

11. Lesegerät (2) nach Anspruch 10, **dadurch gekennzeichnet, dass** die Leseeinrichtung (12) für die Karten (4) zwischen den beiden Desinfektionseinrichtungen (14, 24) angeordnet ist.

12. Lesegerät (2) nach einem der Ansprüche 1 bis 11, **dadurch gekennzeichnet, dass** es zwei Transporteinrichtungen (18, 20) für die Karten (4) enthält.
